# EUROPÄISCHE PATENTANMELDUNG

(11) **EP 0 647 594 A2**
(43) Veröffentlichungstag der Anmeldung: **12.04.1995**
(21) Anmeldenummer: 94115861.0
(22) Anmeldetag: 07.10.1994
(51) Int. Cl.: C02F 1/46

(54) **Elektrostatische Wassersterilisierapparat**

(30) Priorität: 09.10.1993 CN 93226400
(71) Anmelder: Tongji-Universität, 200092 Shanghai (CN); Gao, Yuan, D-10823 Berlin (DE)
(72) Erfinder: Qin, Yi Jiefang Building, CN-200092 Shanghai (CN); Zhang, Desheng, CN-200092 Shanghai (CN); Han, Baiping, CN-200092 Shanghai (CN); Gao, Tingyao, CN-200092 Shanghai (CN)
(74) Vertreter: Pfenning, Meinig & Partner

(57) **Zusammenfassung**

Beschrieben worden ist ein Wasserbehandlungsapparat, der ein geflanschtes Zylindergehäuse, sowie eine langgestreckte, im Zentrum des Gehäuses angeordnete Elektrode aufweist, wobei ein Generator für elektrostatische Niederspannung außerhalb des Gehäuses angeordnet ist, und wobei ein Wassereinlaß und ein Wasserauslaß neben einem Paar von Isolationsstücken an den beiden Enden des Gehäuses vorgesehen sind. Das gesamte Gehäuse ist an seiner gesamten Innenfläche mit einem hochleitfähigen, auf negativem elektrischen Potential liegenden Material ausgekleidet, so daß es als negative Elektrode wirken kann. Ein elektrostatisches Feld niedriger Spannung wird zwischen der positiven und negativen Elektrode im Inneren des Gehäuses nach Einschalten des Generators aufgebaut. Kennzeichnend ist, daß eine vorgegebene Elektronendichte erzeugt wird, wenn das Wasser durch das Feld strömt, um einen vorbestimmten Betrag von aktivem Sauerstoff in dem Wasser zur Sterilisierung von mehr als 95% der Bakterien und der Algen in dem durchlaufenden Wasser zu erzeugen.

## Beschreibung

Die Erfindung befaßt sich mit der Wasserreinigungsmaßnahme und insbesondere mit einem Wasserreiniger, der ein elektrostatisches Niederspannungsfeld zur Erzeugung einer gewissen Elektronendichte und einer bestimmten Menge aktiven Sauerstoffs verwendet, was die biologischen Lebensbedingungen für Bakterien und Algen im Wasser zerstört, so daß ein Sterilisiereffekt erreicht wird.

Trinkwasser oder Wasser für gewerbliche Zwecke muß sterilisiert und chemisch behandelt werden wie zum Beispiel durch die Zugabe von Bleichpulver oder chloriertem Sterilisator zum Wasser wie auch Kupfersulfat zur Zerstörung der Bakterien und Algen, was heute übliche Praxis ist. Jedoch hat die Verwendung von chlorhaltigen Wirkstoffen im Wasser folgende Nachteile:
a) sie reizen das menschliche Auge, die Nase wie auch die Haut;
b) unter gewissen Umständen können chlorierte organische Verbindung eine Krebsgefahr bedeuten;
c) unwirtschaftliche Verwendung;
d) eine Leckage von Chlorverbindungen ist für den menschlichen Körper toxisch; und
e) sowohl Chlorverbindungen wie auch Sauerstoff greifen die Leitungen und Installationen an.

Weiter ist der Einsatz von Chemikalien zur Algenvernichtung im Wasser für gewerbliche Zwecke sehr aufwendig und unvollständig und in der Lage, unerwünschte Sekundärwirkungen wie Kontamination und dergleichen zu verursachen.

Seit einigen Jahren finden elektro-magnetische Verfahren Anwendung bei der Wasserbehandlung, indem prinzipiell die physikalischen und chemischen Eigenschaften des Wassers zur Vermeidung von Verkrustungen geändert werden. Jedoch läßt die Sterilisierwirkung zu wünschen übrig. Weiter führt es zur Bindung von Luft während der Behandlung und kann große Wassermengen beispielsweise für Schwimmbecken oder in Wasserzirkulationssystemen für gewerbliche Zwecke, speziell Druckwasser nicht behandeln.

Die Erfindung hat zur Aufgabe, eine Vorrichtung zum Abtöten von Bakterien und Algen im Wasser zu schaffen. Dazu werden ein Paar von Elektrodenplatten zur Erzeugung eines elektrostatischen Niederspannungsfeldes verwendet, so daß, wenn das Wasser hindurchläuft, ihm eine vorbestimmte Elektronendichte mitgegeben wird, um eine vorbestimmte Menge von aktivem Sauerstoff zum Abtöten der Bakterien und der Algen im Wasser durch Entzug ihrer Lebensbedingungen zu schaffen.

Demzufolge weist der erfindungsgemäße Wasserbehandlungsapparat ein im wesentlichen zylindrisches Gehäuse mit Flanschen sowie eine positive Elektrode aus hochleitfähigem wasserstoffresistentem Material, die mittig im Gehäuse angeordnet ist, sowie einen Niederspannung-Elektrostatik-Generator auf, der außerhalb des Gehäuses lokalisiert ist. Das Gehäuse, das an der gesamten Innenfläche mit einem hochleitfähigen Material negativen Potentials beschichtet ist, wirkt als negative Elektrode. Ein Niederspannungsfeld wird daher zwischen der positiven und der negativen Elektrode aufgebaut, wenn der Generator arbeitet. Das Gehäuse besitzt ferner einen Wassereinlaß und einen Wasserauslaß an den beiden Enden. Wenn Wasser durch das Gehäuse strömt, werden mehr als 95% der Bakterien und Algen durch das elektrostatische Feld innerhalb weniger Sekunden abgetötet.

Ein Experiment der erfindungsgemäßen Wasserbehandlung ist in einem Schwimmbad durchgeführt worden. Das Ergebnis zeigt, daß die Gesamtzahl von Bakterien, die im behandelten Wasser enthalten sind, kleiner ist als 1000/ml und die Gesamtzahl der koliähnlichen Bazillen kleiner ist als 18/l.

Die Erfindung wird im einzelnen besser verstanden aus der nachfolgenden, ins einzelne gehenden Beschreibung anhand der beigefügten Figuren.

Es zeigen:
- Fig. 1: einen Schnitt zur Erläuterung einer bevorzugten Ausführungsform der Erfindung; und
- Fig. 2: eine Draufsicht zur Darstellung des äußeren Erscheinungsbildes der Erfindung.

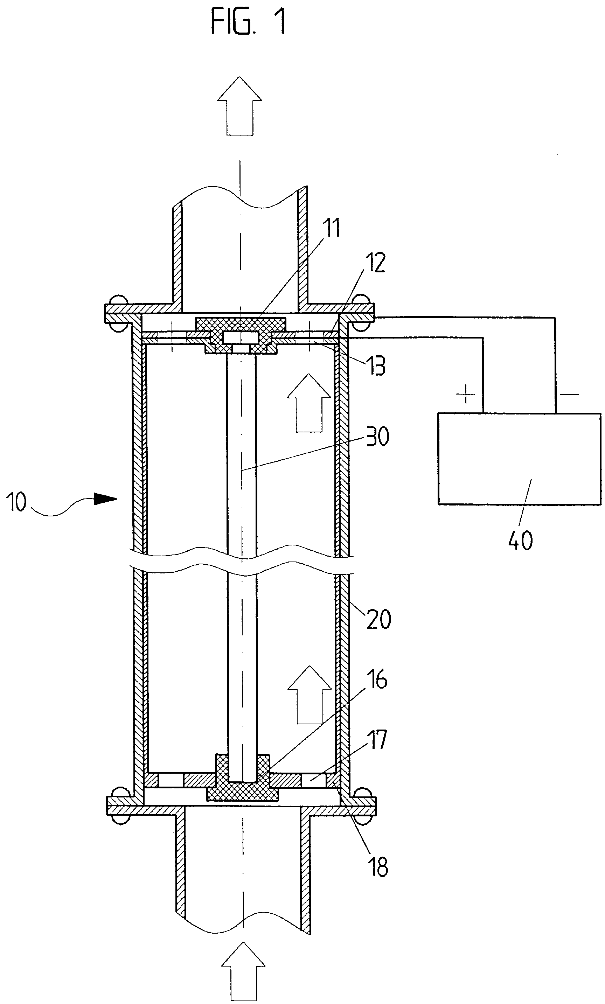

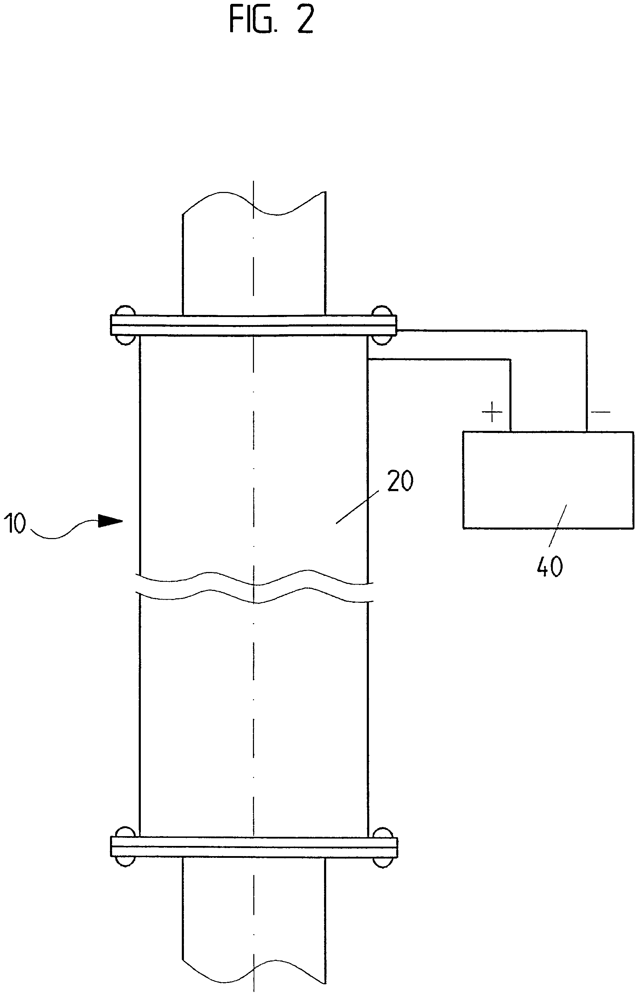

Gemäß Figuren 1 und 2 umfaßt der erfindungsgemäße Wasserbehandlungsapparat 10 einen mit Flanschen versehenes zylindrisches Gehäuse 20 und eine langgestreckte positive Elektrode 30, die in dem Gehäuse mittig angeordnet ist sowie einen Generator 40 außerhalb des Gehäuses 20 zur Erzeugung eines Niederspannungsfeldes.

Das mit Flanschen versehene Gehäuse 20, welches an seiner gesamten Innenperipherie mit einem hochleitfähigen Material negativen elektrischen Potentials beschichtet worden ist, wirkt als negative Elektrode, während die langgestreckte positive Elektrode 30 aus hochleitfähigem, wasserstoffresistentem Material gefertigt und an ihren beiden Enden an einem Paar von Isolationsteilen 11 und 16 in der Mitte der Enden des Gehäuses 20 befestigt ist. Ein Paar von Kreisventilen 12 und 18, die neben den Isolationsteilen 11 und 16 befestigt sind, besitzen an ihren mittleren Abschnitten Öffnungen 13 und 17, die einen Wassereinlaß und einen Wasserauslaß für das Gehäuse 20 bilden. Die Flansche an den beiden Enden des Gehäuses sind mit mehreren Schraublöchern versehen, die die Verbindung des Gehäuses 20 mit entsprechenden Flanschen einer Wasserleitung (Fig. 2) erleichtern.

Ein Generator 40 für niedrige elektrostatische Spannung befindet sich außerhalb des Gehäuses 20 und umfaßt ein rechteckiges Gehäuse und ein Paar Anschlußkabel, die mit der langgestreckten positiven Elektrode 30 beziehungsweise dem als negative Elektrode wirkenden Gehäuse 20 verbunden sind, so daß ein elektrostatisches Feld niedriger Spannung erzeugt wird, wenn der Generator eingeschaltet ist, wobei dem durchströmenden Wasser eine vorbestimmte Elektronendichte mitgegeben wird, die in dem Wasser eine vorbestimmte Anzahl von aktivem Sauerstoff wie etwa das freie Radikal des Sauerstoffions (O₂), Wasserstoffperoxid (H₂O₂), freies Hydroxylradikal (OH) und Sauerstoffmoleküle (O₂) mitgibt, worin das freie Sauerstoffradikal (O₂) eine starke Fähigkeit zum Abtöten bzw. Sterilisieren der Bakterien und der Algen in dem Wasser in der Weise besitzt, daß die biologischen Zellen durch Peroxidation ihrer biologischen Membrane zerstört werden, so daß die Lebensbedingungen für diese entzogen werden.

Ein Experiment bei einer Wasserbehandlung in einem Schwimmbecken von 50m mal 50m, bei dem der erfindungsgemäße Apparat verwendet worden ist, hat ergeben, daß dieser Apparat eine Kapazität von etwa 100 l/h unter einer vorbestimmten Elektronendichte besitzt. Etwa 60 bis 90% der Bakterien und Algen wurden während eines Durchlaufs des Wassers abgetötet. Wenn das Wasser wiederholt den Apparat in einem Zirkulationssystem durchläuft, ist das Ergebnis deutlich besser, so daß die Gesamtzahl der Bakterien kleiner als 1000/ml und der koliartigen Bazillen weniger als 18/l beträgt.

Weiter besitzt der erfindungsgemäße Wasserbehandlungsapparat keine Richtungsbeschränkung, so daß er aufrechtstehend oder horizontal angeordnet werden kann oder daß Wassereinlaß und Wasserauslaß vertauscht werden können. Der Niederspannungsgenerator erzeugt einen Gleichstrom geringer Spannung und ist daher für den menschlichen Körper ungefährlich.

Basierend auf der vorstehend beschriebenen Ausführungsform besitzt der erfindungsgemäße Wasserbehandlungsapparat zahlreiche Merkmale und Vorteile wie folgt.
a) Der Wassereinlaß und der Wasserauslaß, die an den beiden Enden des Gehäuses lokalisiert sind, lösen das Luftstauproblem, das während der Wasserbehandlung auftritt, was die Effektivität und die Kapazität der Wasserbehandlung erhöht.
b) Er verarbeitet eine große Wassermenge innerhalb sehr kurzer Zeit,
c) Er ist wirtschaftlich aufgrund seiner einfachen Herstellung, Installation und Demontage; und
d) Er ist sicher wegen der Nichtverwendung toxischer chemischer Stoffe wie etwa Bleichpulver, chlorierte Sterilisiermittel oder Kupfersulfat.

Man beachte, daß die vorstehende Beschreibung sich nur auf ein Ausführungsbeispiel der Erfindung bezieht und nicht als beschränkend für die Erfindung angesehen werden darf, wobei viele Veränderungen und Modifikationen möglich sind, ohne daß von dem Erfindungsgedanken oder deren Schutzbereich, wie er durch die beigefügten Ansprüche definiert ist, abgewichen wird.

Der vorstehend beschriebene Wasserbehandlungsapparat wurde zur Desinfektion des im Kreislauf geführten Wassers des Schwimmbades der Tongji-Universität, Shanghai, China, eingesetzt. Die Betriebsparameter und das Ergebnis waren die folgenden:
Stromstärke: ca. 1,4 Ampere,
Spannung an den Elektroden: ca. 3 10 Watt,
Stromverbrauch: ca. 45 Watt,
Abmessung des Versorgungsgerätes: 280mm x 155mm x 280mm
Abmessung der Vorrichtung:
Länge der Kathode: 1170 mm,
Rohr-Durchmesser: 219 mm,
Abstand der Isolierstücke: 1050 mm,
Material der Kathode: Metallegierung auf Titanium-Basis
Material der Anode = Rohrinnenwand, zink-beschichtet, Wasser-Durchsatz ca.: 100 m³/h,
Verringerung der Bakterienzahl nach 1 Durchlauf:
ca: 95 99%.

## Patentansprüche

1. Wasserbehandlungsapparat (10) mit einem geflanschten Zylindergehäuse (20), einer langgestreckten positiven Elektrode (30), die koaxial längs des Gehäuses (20) angeordnet ist, und mit einem Generator (40) für elektrostatische Niederspannung, der außerhalb des Gehäuses (20) angeordnet ist, einem Paar von Isolierstücken (11, 16), die an den beiden Enden des Gehäuses befestigt sind, um die beiden Enden der langgestreckten positiven Elektrode (30) zu halten; wobei die beiden Enden des Gehäuses (20) einen Wassereinlaß und einen Wasserauslaß definieren und ein Paar Kabeln von dem Generator (40) mit der positiven Elektrode (30) beziehungsweise dem Gehäuse (20) verbunden sind, das als negative Elektrode dient; wodurch ein elektrostatisches Feld niedriger Spannung zwischen der positiven und negativen Elektrode derart erzeugt wird, daß bei eingeschaltetem Generator (40) etwa 95% der Bakterien und Algen in dem durchlaufenden Wasser abgetötet (sterilisiert) werden.

2. Wasserbehandlungsapparat nach Anspruch 1, bei dem das Gehäuse (20) mit seiner gesamten Innenfläche mit einem hochleitfähigen auf negativen elektrischem Potential befindlichen Material ausgekleidet ist.

3. Wasserbehandlungsapparat nach Anspruch 1, bei dem die langgestreckte positive Elektrode (30) aus hochleitfähigem wasserstoffresistentem Material besteht.

4. Wasserbehandlungsapparat nach Anspruch 1 mit mehreren um die Fläche der Flansche des Gehäuses angeordneten Schraublöchern zum Verbinden mit geflanschten Wasserleitungen.

5. Wasserbehandlungsapparat nach Anspruch 1, wobei das Gehäuse (20) aufrecht oder horizontal angeordnet sein kann.

6. Wasserbehandlungsapparat nach Anspruch 1, wobei der Wassereinlaß und der Wasserauslaß vertauscht werden können.
